# EUROPEAN PATENT APPLICATION

(11) **EP 0 921 522 A1**
(43) Date of publication of application: **09.06.1999**
(21) Application number: 98917714.2
(22) Date of filing: 27.04.1998
(51) Int. Cl.: G11B 13/04, G11B 7/24, G11B 5/80, B42D 15/10

(54) **INFORMATION STORAGE MEDIUM**

(30) Priority: 07.05.1997 JP 11674097
(71) Applicant: Usui, Masaaki, Kitasaku-gun, Nagano 384-2103 (JP)
(72) Inventor: Usui, Masaaki, Kitasaku-gun, Nagano 384-2103 (JP)
(74) Representative: Calderbank, Thomas Roger
(86) International application number: JP9801946
(87) International publication number: WO9850917

(57) **Abstract**

An information storage medium wherein much more data can be written at high density and which is hard to fabricate or steal and therefore is very reliable. The information storage medium is made by stacking, on a transparent resin substrate (2), a metal reflection layer (3) wherein light reflected data can be written and a magnetic storage layer (5) wherein magnetic data can be written.

## Description

### FIELD OF TECHNOLOGY

The present invention relates to an information storage medium, e.g., a magnetic card, a flexible disk, in which data cab be written and from which the data can be read.

### BACKGROUND OF TECHNOLOGY

In conventional information storage media, e.g., a magnetic card, a flexible disk, binary data are written, and they are read, by a magnetic head, and processed.

In a CD (compact disk), an LD ( laser disc), etc., which are also examples of the information storage media, projections and concaves (pits) are formed on tracks as binarycoded light reflected data, and they are read by irradiating a light reflection layer of the disk with a laser beam, receiving reflected light therefrom and converting the reflected light into electric signals by a photoelectric element, e.g., a photo diode, a CCD (charge coupled device).

The magnetic card, for example, is made by the steps of: coating a surface of a base film, e.g., PET (polyethylene terephthalate) film, with magnetic paint; writing magnetic data with a data encoder; and printing pictures, etc. on the surface. When the card is inserted into a card reader, the written magnetic data are read by a magnetic head of the card reader.

The flexible disk is made by the steps of: coating a base film with magnetic paint (including a solvent, high polymer binders, etc.); drying the magnetic paint; flattening surfaces of the base film; stamping the base film, by a press machine, to make a circular disk; and lapping surfaces of the circular disk with a lapping tape. Tracks and sectors are written on the magnetic surface of the flexible disk by a magnetic head of a disk drive unit, and written data are magnetically held on the magnetic surface by characteristic of hysteresis. The written data are read by scanning the tracks with the magnetic head of the disk drive unit.

The written data are binary coded digital signals, so they are stored at high density in order to store a large amount of data, but storage capacity of the conventional magnetic cards and flexible disks are limited. The storage capacity of the conventional flexible disk, for example, is 1.44 MB (megabytes) at the most. Further, important data, e.g., pass words, identification codes, are usually written inthe magnetic cards, but the important data, which are made on the basis of random number tables, etc., can be read by a card reader, etc., so the magnetic cards are easily fabricatedor stolen and they are not reliable.

### DISCLOSURE OF THE INVENTION

The present invention is invented to solve the above described problems of the conventional technology, and an object of the present invention is to provide an information storage medium which is capable of storing much more data at high density and which is hard to fabricate or steal and therefore is very reliable.

To solve the problems and achieve the object, the present invention has following structures.

Namely, the information storage medium is made by stacking a magnetic storage layer wherein magnetic data can be written and a light reflection layer wherein light reflected data can be written.

In the information storage medium, a metal reflection layer may be provided under the magnetic storage layer as the light reflection layer, and the light reflected data may be written by forming projections and concaves, which are formed by heat energy absorbed in the magnetic storage layer when a laser beam irradiates the magnetic storage layer, in the metal reflection layer.

In the information storage medium, the magnetic data are written in the magnetic storage layer when the light reflected data are written in the metal reflection layer.

In the information storage medium, one side of the light reflection layer may be covered with the magnetic storage layer, and the other side thereof may be covered with a transparent substrate.

In the present invention, by stacking the metal reflection layer wherein the light reflected data can be written and the magnetic storage layer wherein the magnetic data can be written, a large amount of data can be stored at high density. By combining the binary coded data written in the magnetic storage layer with the binary coded data written in the light reflection layer, quadnary coded data can be produced, so that the information storage medium, which is hard to fabricate or steal and therefore is very reliable, can be provided.

### BRIEF DESCRIPTION OF THE DRAWINGS

Fig. 1 is a perspective view of a magnetic card.
Fig. 2 is a partial sectional view of the magnetic card taken along a line A-A shown in Fig. 1.

### EMBODIMENTS

Preferred embodiments of the present invention will now be described in detail with reference to the accompanying drawings.

Note that, a magnetic card will be explained as an example of the information storage medium.

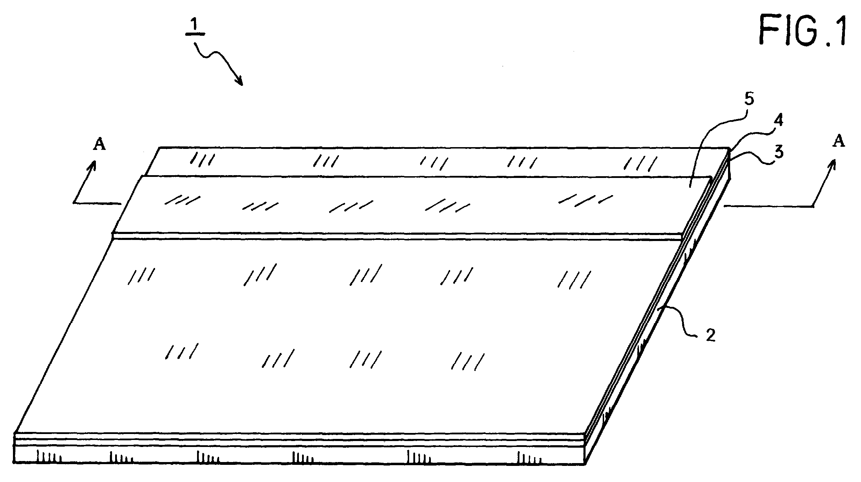

Firstly, a brief structure of the magnetic card will be explained with reference to Fig. 1.

A numeric symbol 1 stands for the magnetic card, e.g., a cash card, a credit card, in which a metal reflection layer 3 which acts as a light reflection layer, a adhesive layer 4 and a magnetic storage layer 5 are stacked on a transparent resin substrate 2. Binary coded digital data are written in the metal reflection layer 3 and the magnetic storage layer 5 of the magnetic card 1, so quadnary coded data can be stored by combining the binary coded data in the both layers.

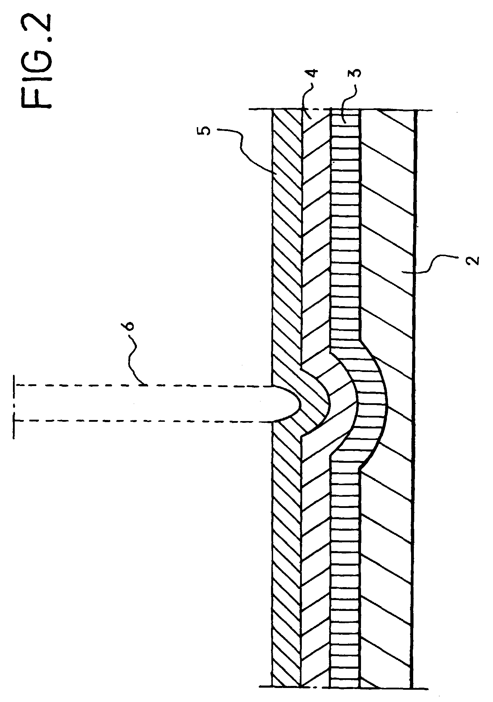

Each structural element of the magnetic card 1 will be explained with reference to Fig. 2.

Fig. 2 is a partial sectional view taken along a line A-A shown in Fig. 1.

The transparent resin substrate 2 is a transparent tape which is capable of highly transmitting light and which is made from, for example, polycarbonate, polyester, polyvinyl chloride.

The metal reflection layer 3 is a metallic film of nickel, aluminum, etc.. The metal reflection layer 3 is provided under the magnetic storage layer 5 and fixed on an upper face of the transparent resin substrate 2 by pressing and heating. The binary coded digital data will be written in the metal reflection layer 3 by forming projections and concaves therein.

The magnetic storage layer 5 is formed by coating known magnetic paint, which is a mixture of a solvent, magnetic powders (powders of ferrous dioxide, chrome oxide, cobalt, etc.), high polymer binders, etc.. Usually the magnetic storage layer 5 is stacked onto the metal reflection layer 3 and adhered thereon by the adhesive layer 4, but it may be directly stacked onto the magnetic storage layer 3. The magnetic storage layer 5 need not be formed on the whole surface of the magnetic card, it may be formed like a belt having a prescribed width and extending in the longitudinal direction of the magnetic card. Magnetic data, which are binary-coded by a data encoder, will be written in the magnetic storage layer 5.

Next, a method of writing information in the magnetic card 1 will be explained. As shown in Fig. 2, a semiconductor laser beam (an infrared ray) 6, whose wave length is 830 nm - 870 nm, irradiates onto the magnetic storage layer 5, the magnetic storage layer 5 absorbs heat energy of the laser beam, then the lower metal reflection layer 3 is expanded by the heat energy absorbed, so that metal deformation, whose size is about 1 micron, is occurred. Light reflected data can be written by forming projections and concaves (a line or lines of pits) by the metal deformation. The magnetic storage layer 5 is carbonized to be demagnetized when the metal deformation is occurred, so that changing data in the magnetic storage layer 5 and fabrication can be securely prevented.

The magnetic data in the magnetic card 1 are read, from the magnetic storage layer 5, by a magnetic head of a card reader for the card; the light reflected data are read by irradiating the transparent resin substrate 2 with a laser beam, light from an LED, etc. and converting intensity of the reflected lights into electric signals by a photo diode, a photoelectric element, etc.. The magnetic storage layer, in which the magnet data are stored, is piled on the metal reflection layer, which is deformed for storing the light reflected data, but an action of the magnetic head for reading the magnetic data is not influenced by the deformation of the metal reflection layer 3.

By combining the binary coded digital data written in the magnetic storage layer 5 and the metal reflection layer 3, storage capacity can be doubled; and quadnary data can be made, so that the magnetic card 1 can be hard to fabricate or steal and therefore can be very reliable. Usually data written in the magnetic storage layer 5 can be changed; in the present embodiment, the magnetic storage layer 5 is demagnetized when the light reflected data are written in the metal reflection layer 3, so that it is very difficult to change the stored data, Further, the magnetic storage layer 3 may be used for temporally storing data; the metal reflection layer 5 may be used for eternally storing important data, e.g., pass words, so that the magnetic card 1 can be valuable.

In the above described embodiment, the magnetic card is explained as the information storage medium, but the present invention is not limited to the magnetic card, so the present invention can be applied to other media, e.g., a flexible disk.

The magnetic storage layer 5 of said flexible disk is made by the steps of: forming the metal reflection layer 3 on the transparent resin substrate 2, which acts as the base in place of the polyester film; coating the metal reflection layer 3 with the magnetic paint (including magnetic powders, high polymer binders, a solvent, etc.); drying the magnetic paint; flattening the surface; and lapping the surface with a lapping tape.

As well as the magnetic card, the semiconductor laser beam (the infrared ray) 6 irradiates onto the magnetic storage layer 5, the magnetic storage layer 5 absorbs the heat energy of the laser beam, then the lower metal reflection layer 3 is expanded by the heat energy absorbed, so that the metal deformation, whose size is about 1 micron, is occurred. The light reflected data can be written by forming the projections and the concaves (a line or lines of pits) by the metal deformation. In this case, the memory storage capacity of the flexible disk of the present embodiment can be quite greater than that of the conventional flexible disks.

To read the data written in the flexible disk, a disk drive unit has a magnetic head and an optical head, which can be respectively located on both sides of the flexible disk.

Note that, many modifications can be allowed without deviating the spirit of the invention, for example optional marks, characters, etc. may be printed on the metal reflection layer 3.

## Claims

1. An information storage medium (1) being made by stacking a magnetic storage layer (5) wherein magnetic data can be written and a light reflection layer (3) wherein light reflected data can be written.

2. The information storage medium (1) according to claim 1, wherein a metal reflection layer (3) is provided under said magnetic storage layer (5) as said light reflection layer (3), and wherein the light reflected data are written by forming projections and concaves, which are formed by heat energy absorbed in said magnetic storage layer (5) when a laser beam (6) irradiates said magnetic storage layer (5), in said metal reflection layer (3).

3. The information storage medium (1) according to claim 2, wherein the magnetic data are written in said magnetic storage layer (5) when the light reflected data are written in said metal reflection layer (3).

4. The information storage medium (1) according to claim 1, 2 or 3, wherein one side of said light reflection layer (3) is covered with said magnetic storage layer (5), and the other side thereof is covered with a transparent substrate (2).
